(19) **Europäisches Patentamt / European Patent Office / Office européen des brevets**

(11) **EP 1 624 704 B1**

(12) **EUROPEAN PATENT SPECIFICATION**

(45) Date of publication and mention of the grant of the patent:
**31.03.2010 Bulletin 2010/13**

(51) Int Cl.:
**H04N 7/50** (2006.01)  **G06T 9/00** (2006.01)

(21) Application number: **05016383.1**

(22) Date of filing: **28.07.2005**

(54) **Video decoder with parallel processors for decoding macro-blocks**

Videodekoder mit Parallelprozessoren für die Dekodierung von Makroblocks

Décodeur vidéo avec processeurs parallèles pour le décodage de macroblocs

(84) Designated Contracting States:
**DE FR GB IT**

(30) Priority: **29.07.2004 IN DE14132004**

(43) Date of publication of application:
**08.02.2006 Bulletin 2006/06**

(73) Proprietor: **STMicroelectronics Pvt. Ltd**
**Noida-201 301, Uttar Pradesh (IN)**

(72) Inventors:
• **Saha, Kaushik**
 **New Delhi (IN)**
• **Sarkar, Abhik**
 **Patparganj,**
 **Delhi 110 092 (IN)**

• **Maiti, Srijib Narayan**
 **Midnapore,**
 **West Bengal (IN)**

(74) Representative: **Ferrari, Barbara**
 **Botti & Ferrari S.r.l.**
 **Via Locatelli, 5**
 **20124 Milano (IT)**

(56) References cited:
 **EP-A- 0 614 317**   **EP-A- 0 651 579**
 **EP-A- 0 710 026**   **EP-A- 1 542 474**
 **WO-A-99/11071**   **US-A- 5 510 842**
 **US-A1- 2002 031 184**

**Description**

Field of the Invention

The present invention relates to a macro-block level parallel implementation of video decoder.

Background of the Invention

MPEG-2 video standard is an important standard for video compression today. MPEG-2 coding/decoding algorithm can be found in different applications such as digital video broadcast, DVD, cable TV, graphics/image processing cards, set top boxes, digital cameras, SDTV and HDTV. Due to different profiles and levels of the MPEG-2 video standard, every application has specific ratio between performance and quality.

The growing demand for high quality video has led to the advancement in the technology of MPEG encoding/decoding process. ISO/IEC 13818-2: 1995 MPEG video standard, ITU-T H.262 Recommendation defines a process in which partitioning the bitstream performs encoding or decoding process. The bitstream is partitioned between the channels such that more critical parts of the bitstream (such as headers, motion vectors, low frequency Discrete Cosine Transform (DCT) coefficients) are transmitted in the channel with the better error performance, and less critical data (such as higher frequency Discrete Cosine Transform (DCT) coefficients) is transmitted in the channel with poor error performance.

The technological improvements come at the cost of increased complexity for real time applications. The real challenge is to cope with the cost and time-to-market. A complete hardware implementation is best to meet the real-time requirement but worst for time-to-market and development cost as described in the paper "Development of a VLSI Chip for Real-Time MPEG-2 Video Decoder", Proceedings of the 1995 International Conference on Image Processing, IEEE, 1995 by Eishi Morimatsu, Kiyoshi Sakai, and Koichi Yamashita.

The reverse is true for a complete implementation in software detailed in "Software MPEG-2 Video Decoder on a 200-MHz, Low Power Multimedia Microprocessor", IEEE, 1998, pp. 3141-3144. This paper presents a low power, 32-bit RISC microprocessor with a 64-bit "single instruction multiple data" multimedia coprocessor, V830R/AV and its MPEG-2 video decoding performance. This coprocessor basically performs multimedia oriented four 16-bit operations every clock, such as multiply-accumulate with symmetric rounding and saturation, and accelerates computationally intensive procedures of the video decoding; an 8X8 IDCT is performed in 201 clocks. The processor employs the concurrent Rambus DRAM interface, and facilities for controlling cache behaviors explicitly by software to speed up enormous memory accesses necessary to motion compensation.

The best trade-offs have been obtained with the hardware-software codesign approach as described in "HW/SW codesign of the MPEG-2 Video Decoder", Proc. International Parallel and Distributed Processing Symposium (IPDPS'03). In this the VLC decoding algorithm and Inverse Discrete Cosine Transform (IDCT) algorithm are implemented with fast parallel architectures directly in hardware. Hardware part is described in VHDL/Verilog and implemented together with the RISC processor in a single Virtex 1600E FPGA device. The algorithms are run in software on 32-bit RISC processor for decoding of the coded bitstream, inverse quantization and motion-compensation implemented in FPGA and using Linux as the operating system. This partitioning is therefore done at frame level to achieve better timing properties and lower power consumption.

The software-based implementation has the advantage of easy adaptability of future enhancements. In all cases, higher processing throughput is currently the need. The solution is either to have a very high-speed special purpose processor or a set of processors with lower speed, working in parallel. A paper by Mikael Karlsson Rudberg, and Lars Wanhammar, "An MPEG-2 Video Decoder DSP Architecture", Proc. 1996 IEEE Digital Signal Processing Workshop, pp. 199-202 elaborates one such architecture.

The faster processors are expensive both in terms of cost and power consumption, whereas the recent development in the System on Chip (SOC) front gives us the freedom to have multiple simple processors in a single system making parallel implementation a more economical solution.

Applications involving computations on large amounts of data e.g. multimedia codecs lead to excessive loading of the CPU. Through parallel computation the loading of each machine is reduced as the computational effort is distributed among the machines. This enhances the speed of computation by a factor, which is a function of the number of processors used.

There are primarily two paradigms of parallel computation, shared memory system and distributed memory system. Details of distributed memory system can be obtained from "Fundamentals of Distributed Memory Computing", Cornell Theory Center: Virtual Workshop Module.

The shared memory approach needs a multi-port memory to be used as the means of communication between the computing nodes for simultaneous access of operands. This approach makes parallel application development easier. However, implementation of multi-port memories is expensive in the present state of memory technology. On the other hand the distributed memory approach avoids this complexity in hardware and thereby reduces the silicon cost significantly. However, the task of application development is made more difficult.

The European Patent No. EP 0 710 026 of Matsushita Electric Industrial Co. Ltd. discloses a parallel architecture for a high definition television video decoder having multiple independent frame memories. The parallel architecture includes N processing means each one receiving a respectively different one bit stream of an image sequence. Each of N processing means being variable length decoding means for decoding encoded image data and motion vector data from the one bit stream.

US patent 6678331 discloses a circuit that includes a microprocessor, an MPEG decoder for decoding an image sequence, and a memory common to the microprocessor and to the decoder. The circuit also includes a circuit for evaluating a decoder delay, a control circuit for, if the decoder delay is greater than a predetermined level, granting the decoder a memory access priority, and otherwise, granting the microprocessor the memory access priority.

The processing speed constraint for multimedia application is becoming more demanding. MPEG-2 video decoder lays the foundation for more complex video decoders. Hence the following processing technique can be treated as a step towards parallel implementation of more advanced complex video decoding technologies.

Summary of the Invention

To overcome the above limitations the present invention provides a macro-block level parallel implementation of MPEG-2 video decoder in parallel processing environment i.e. shared memory as well as distributed memory systems.

The object of this invention is to provide an implementation of MPEG-2 video decoding in parallel processing environment, parallelization being at the macro-block level.

Another object of this invention is to provide high speed up.

Yet another object of this invention is to provide better load balancing of the processors.

Another object of this invention is to have less data dependency among the processors.

Yet another object of this invention is to provide a simpler I/O architecture and minimize shared memory access for shared memory architecture and minimize traffic on the underlying interconnection network for distributed memory architecture.

Further object of the invention is to provide high computation to communication ratio for distributed memory architecture.

To achieve these objectives, the present invention provides a macro-block level parallel implementation of a video decoder in parallel processing environment comprising:

a Variable Length Decoding (VLD) block to decode the encoded Discrete Cosine Transform (DCT) coefficient;

a master node which receives said decoded Discrete Cosine Transform (DCT) coefficients; and,

plurality of slave nodes/processors for parallel implementation of Inverse Discrete Cosine Transform (IDCT) and motion compensation at macro-block level.

The master node communicates decoded data to said plurality of slave nodes for distributed memory systems.

The master node segregates data to be processed by said plurality of slave nodes for shared memory systems.

The slave nodes/processors processes equal portions of picture and compute the output to be written on a single memory buffer.

The master node and the slave nodes/processors comprise of computation and communication threads for distributed memory architectures.

The communication threads help in communication of said master node and said slave nodes/processors amongst each other.

A method for macro-block level video decoding in parallel processing system comprising the steps of:

decoding the encoded Discrete Cosine Transform (DCT) coefficient in a Variable Length Decoding (VLD) block;

segregating said decoded Discrete Cosine Transform (DCT) coefficients in a master node; and,

performing parallelized Inverse Discrete Cosine Transform (IDCT) and motion compensation using plurality of slave nodes/processors.

The non-zero Discrete Cosine Transform (DCT) coefficients are packed into the buffer reducing data dependency on the slave nodes/ processors.

Brief Description of the drawings:

The present invention will now be described with reference to the accompanying drawings:

Fig. 1 shows the system overview of the present invention for distributed memory system.

Fig. 2 shows the architectural view of the present invention for distributed memory system.

Fig. 3 shows the algorithmic view of the present invention for distributed memory system.

Fig. 4 shows the system overview of the present invention for shared memory system.

Fig. 5 shows the architectural view of the present invention for shared memory system.

Fig. 6 shows the algorithmic view of the present invention for shared memory system.

Detailed Description of the Drawings

The detailed description starts with the overview of the MPEG-2 decoding system followed by implementation details, simulation environments and results. The description is for 4-processor implementation but this is applicable for 2-processor systems also.

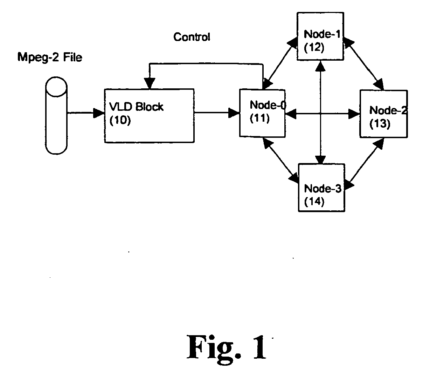

The present invention relates to a parallel implementation of Inverse Discrete Cosine Transform (IDCT) and motion compensation of the MPEG-2 video decoder using a four node Beowulf Cluster simulating distributed memory architecture. The system for MPEG-2 video decoding, as shown in figure 1, comprises a Variable Length Decoding VLD block (10) connected to a processing node called master node (11) of a cluster of processing units or processors for control purposes, hereinafter indicated as nodes, processing nodes or processors. The nodes are interconnected to each other through an underlying network.

The Variable Length Decoding (VLD) is a standard process in MPEG-2, which decodes encoded Discrete Cosine Transform (DCT) coefficients and motion vectors. This decoded data is communicated by the master node (11) to the rest of the processors or slave nodes (12, 13 & 14). Thereafter the Inverse Discrete Cosine Transform (IDCT) and motion compensation is carried out in parallel by all the nodes (11-14).

The Variable Length Decoding VLD block (10) separates macro block data for each processor and the master node (11) distributes them to the rest of the processors subsequently. Thereafter each processor performs the Inverse Discrete Cosine Transform (IDCT) for its quadrant of macro blocks. The data for motion compensation is communicated to/from the other processors. The merit of this approach is that, in each processor only the macro block at the quadrant boundary requires data from other processors for motion compensation. So, the data dependency is less.

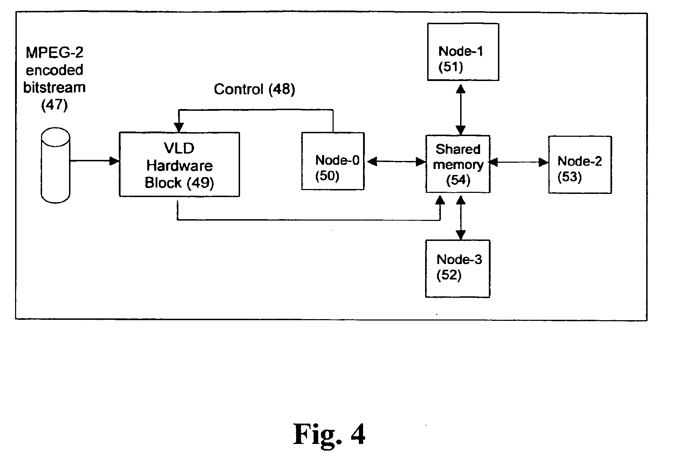

For shared memory architecture, all the nodes (50 to 53) process on separate portions of data block. The nodes (50 to 53) need not communicate data to the other processors; rather they share a common memory space (54) for data needed by all the processors (50 to 53) as illustrated in figure 4.

The sample decoder implementation from MPEG Software Simulation Group has been parallelized. The parallelization is at the macro-block level.

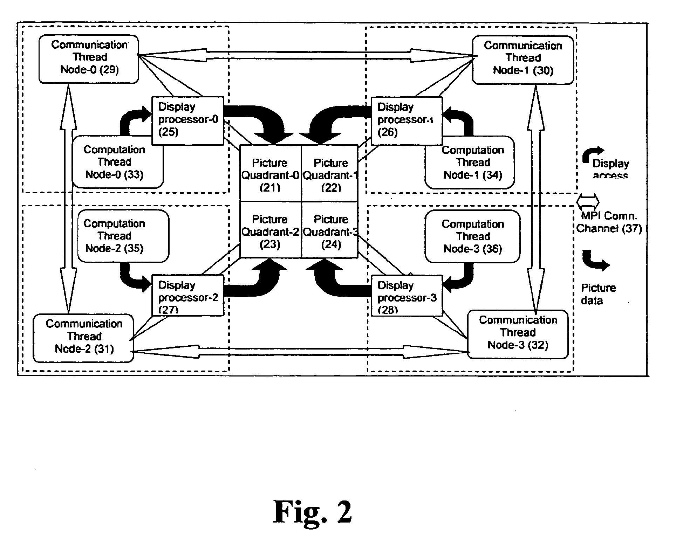

Fig. 2 shows the architectural view of the present invention for distributed memory architecture having four processors. As shown in the figure, picture frame has been separated into 4 quadrants namely 21, 22, 23 and 24. The output to be displayed on each of the four quadrants is separately computed and written by a corresponding node on a single video memory buffer.

Each of the processors has two separate threads called the computation thread and the communication thread. The communication threads (29, 30, 31 & 32) communicate with every other communication thread in other processors through the underlying message passing system viz. MPI (37) whereas the computation threads (33, 34, 35 & 36) go on performing Inverse Discrete Cosine Transform (IDCT) and motion compensation for the macro blocks of its quadrant for which there are no data requirements from the other processors.

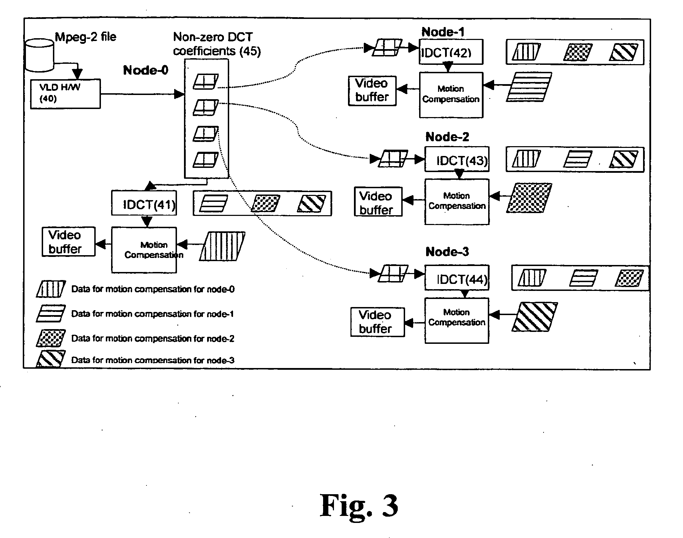

Figure 3 shows an MPEG-2 video decoding which is is divided into two main functional blocks, namely a Variable Length Decoding VLD block (40) and an Inverse Discrete Cosine Transform IDCT (41-44). The Variable Length Decoding VLD block (40) generates the Discrete Cosine Transform (DCT) coefficients. Only the non-zero Discrete Cosine Transform DCT coefficients (45) for each DCT-block are packed into a video buffer. Due to the inherent nature of the DC and AC coefficients in an MPEG file, this approach leads to fewer amounts of data to be communicated to the processors. The DC coefficients are packed in as they are since they constitute the average energy value of each DCT-block, which makes it the largest value in the DCT-block. The DC coefficients are preceded by a count of the number of non-zero Discrete Cosine Transform (DCT) coefficients (for a DCT-block) to be followed.

An AC coefficient requires approximately 10 bits of storage, thus another 6 bits store the positional coordinates x and y (3 bits each since MPEG-2 DCT-blocks are 8 by 8 in dimension) of the non-zero coefficient within the DCT-block. This approach will be more efficient in distributed memory systems for bit-streams with lower bit rates as the number of non-zero coefficients will be less.

Once all the Discrete Cosine Transform (DCT) coefficients have been recovered from the compressed data, the rest of the three nodes receive their corresponding coefficients from node-0. The Inverse Discrete Cosine Transform (IDCT) in all the nodes is performed in parallel while the communication threads exchange data required for the motion compensation with each other. After Inverse Discrete Cosine Transform (IDCT) has been performed and the data for motion compensation has been received, motion compensation is carried out in parallel by all the nodes and displayed subsequently.

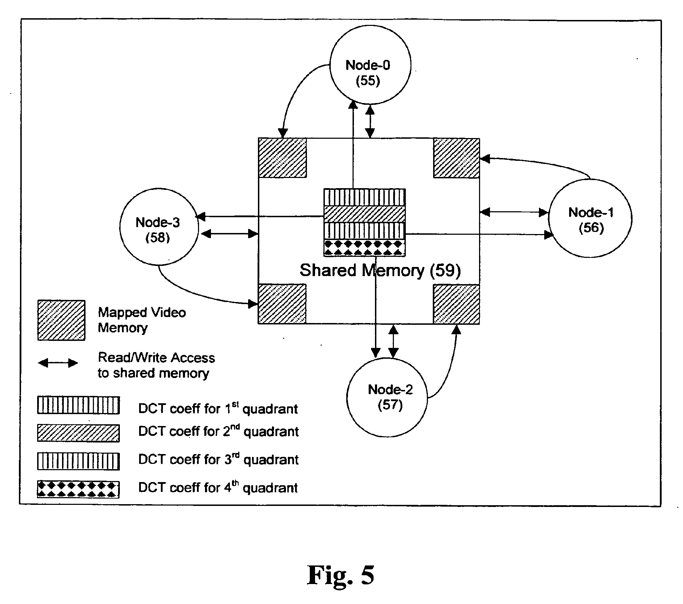

Figure 5 shows the architectural view of the present invention for shared memory system. In shared memory approach, the Variable Length Decoding (VLD) block segregates Discrete Cosine Transform (DCT) coefficients and puts in a shared memory (59) and all processors (55 to 58) can access data assigned to them. The Inverse Discrete Cosine Transform (IDCT) and motion compensation are performed in parallel. The data for motion compensation is fetched from shared memory (59), where the previously decoded frames are stored.

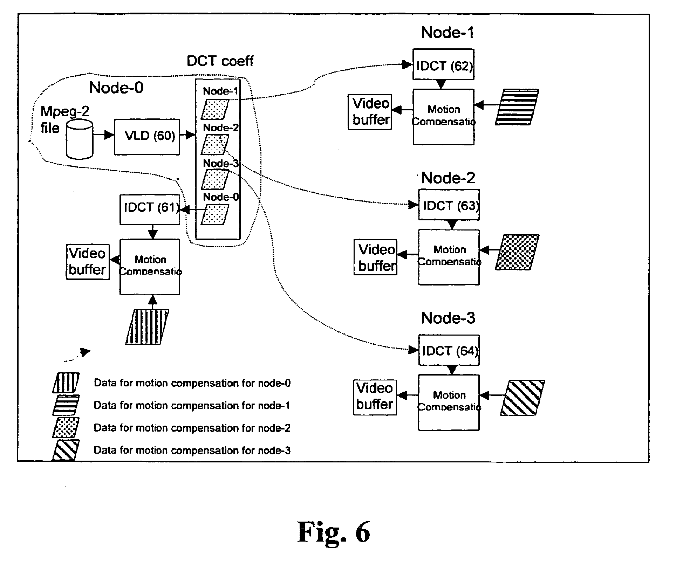

Figure 6 presents the algorithmic view of the decoder on shared memory system. In this case the Discrete Cosine Transform (DCT) coefficients of all the macro-blocks are stored in the memory. Thereafter, every processor performs Inverse Discrete Cosine Transform IDCT (61 to 64) on its allotted set of coefficients. The motion compensation data is accessed from the previously decoded frames buffered in shared memory. The decoded pixel values are then placed into mapped video memory.

Hardware used for simulation purposes:

Linux cluster consisting of 4 Intel Pentium-II processors running at 400MHz networked in Star Topology on 10base-T UTP Ethernet.

Software Used:

    a. Linux kernel 2.4.7-10.

    b. Lam-MPI-6.5.6 - Parallel programming library, based on MPI message passing API.

    c. PAPI Profiling Tool- makes processor's hardware counters available to profiler application libraries like TAU.

    d. TAU-2.12.9.1- Profiler Library uses the hardware counters to generate traces.

    e. VAMPIR-4.0.0.0 - Graphical Display for profiled traces generated by TAU.

The behavior of the decoder in terms of speed-up, data dependency, computation to communication ratio and load balancing is obtained. Speed-up is for the parallelizable portion of the decoding process i.e. Inverse Discrete Cosine Transform (IDCT) and Motion-Compensation. The data dependency is calculated in terms of the ratio of the number of bytes processed by one processor and the number of bytes to be communicated from other processors for motion compensation.

Speed-up:

$$\text{Sequential execution Time } (T_{SEQ}) = T_{IDCT,}$$

Where

$$T_{IDCT} = \text{Execution Time for IDCT} + \text{Motion Compensation in one processor}$$

$$\text{Parallel execution Time } (T_P) = T_{IDCT\text{-}Parallel},$$

where,
$T_{IDCT\text{-}Parallel}$ = average execution time for IDCT and Motion Compensation in single processor (4 processors executing IDCT and Motion Compensation in parallel).

Ideally should be $T_{IDCT}$ /N, where N is the number of processors.

$$\text{Speed Up} = T_{IDCT} / T_{IDCT\text{-}Parallel} = 3.87, \text{ for } N = 4.$$

Data Dependency (for distributed memory architecture):

$$\text{Data Dependency (for each processor)} = \text{Amount of data (bytes) communicated from other processors} / \text{Number of data (bytes) processed by one processor} = 12.38\%$$

The Data Dependency for motion compensation decreases with the increase in size of the picture since only the macro-blocks at the edges of the quadrants require data to be communicated. The ratio between the macro-blocks at the edges of a picture to the total macro-blocks in a quadrant decreases with increase in the size of picture.

Computation to Communication Ratio (for distributed memory architecture) :

Computation to communication ratio is calculated as the ratio of computation cycles on communicated data and data communication between well-defined synchronization events.

About 254 cycles/byte Computation to communication ratio has been obtained with the synchronization point being completion of one frame decoding.

Load Balancing:

For distributed memory architectures, the thread-based communication helps the processors to perform the computation in parallel with the communication of data for motion compensation. This way all the processors are kept busy all the time.

Since the number of DCT blocks in each quadrant is same, the Inverse Discrete Cosine Transform (IDCT) load on each node is balanced with respect to the others. Since the motion compensation data dependency between nodes is small, as described above, every node, on an average, does the same number of computations for motion compensation as the others.

For distributed memory architecture, the communication bandwidth requirement for the network of Beowulf cluster is about 2.88 Mbps for a typical video sequence. This communication is comprised of Discrete Cosine Transform (DCT) coefficients (92.5%) and motion compensation data (7.5%).

The present application highlights one approach of parallelizing the MPEG-2 video decoding process on parallel processing environment along with simulation results. The inherent inter-processor data dependency in the MPEG-2 video is due to the motion estimation /compensation. Using this implementation this dependency is reduced. This approach also improves load balancing between processors, due to the application partitioning. This manner of partitioning also leads to a simpler I/O architecture (figure 2) and minimizes traffic on the underlying interconnection network for distributed memory systems.

For shared memory systems this reduces the shared memory access. The speed-up is also close to the number of processors.

**Claims**

1. A macro-block level parallel implementation of a video decoder in parallel processing environment comprising:

   a variable length decoding block (10; 40; 49; 60) and **characterized in that** said variable length decoding block (10; 40; 49; 60) decodes encoded discrete cosine transform (DCT) coefficient at macro-block level and partitions said discrete cosine transform (DCT) coefficient in predetermined packets which comprise equal portions of macro-blocks;
   a master node (11; 45; 50; 55) which receives a packet of said decoded discrete cosine transform (DCT) coefficients; and,
   a plurality of slave nodes/processors (12-14; 41-44; 51-53; 56-58) each of them receiving one of remaining packets for parallel implementation of inverse discrete cosine transform (IDCT) and motion compensation at macro-block level.

2. A macro-block level parallel implementation of a video decoder in parallel processing environment as claimed in claim 1 **characterized in that** said master node (11) communicates said packets of decoded data to said plurality of slave nodes (12-14) for distributed memory systems.

3. A macro-block level parallel implementation of a video decoder in parallel processing environment as claimed in claim 1 **characterized in that** it comprises an interconnected shared memory (59) that segregates data to be processed by said master node (55) and by said plurality of slave nodes (56-58) for shared memory systems.

4. A macro-block level parallel implementation of a video decoder in parallel processing environment as claimed in claim 1 **characterized in that** said slave nodes/processors (12-14) processes said packet and compute the output to be written on a single memory buffer.

5. A macro-block level parallel implementation of a video decoder in parallel processing environment as claimed in claim 1 **characterized in that** said master node (11) and said slave nodes/ processors (12-14) comprise computation threads (33-36) and communication threads (29-32) for distributed memory architectures.

6. A macro-block level parallel implementation of a video decoder in distributed memory system as claimed in claim 5 **characterized in that** said communication threads (29-32) help in communication of said master node (11) and said slave nodes/processors (12-14) amongst each other.

7. A method for macro-block level video decoding in parallel processing system **characterized in that** comprises the steps of:

   decoding at macro-block level encoded discrete cosine transform (DCT) coefficients in a variable length decoding block (49); segregating said decoded discrete cosine transform coefficients in predetermined packets which comprise equal portions of macro-blocks ; and,
   performing parallelized inverse discrete cosine transform and motion compensation using plurality of slave nodes/processors (51-53) and a master node (11; 50; 55), each of them processing one of said packets.

8. A method for macro-block level video decoding in distributed memory system as claimed in claim 7 **characterized in that** non-zero discrete cosine transform coefficients are packed into a buffer reducing data dependency on the slave nodes/processors (51-53).

**Patentansprüche**

1. Parallelimplementation eines Videodecorders auf Makroblockebene in einer Parallelverarbeitungsumgebung, aufweisend:

   einen Decodierblock variabler Länge (10; 40; 49; 60), und **gekennzeichnet dadurch, dass** der längenvariable Decodierungsblock (10; 40; 49; 60) codierte diskrete Kosinustransformations-Koeffizienten (DCT) auf Makroblockebene decodiert und die diskreten Kosinustransformations-Koeffizienten (DCT) in vorbestimmte Pakete aufteilt, die gleiche Teile von Makroblöcken beinhalten;
   einen Hauptknoten (11; 45; 50; 55), welcher ein Paket der decodierten diskreten Kosinustransformations-Koeffizienten (DCT) entgegennimmt; und

eine Mehrzahl von Dienst-Knoten/Prozessoren (12-14; 41-44; 51-53; 56-58), von denen jeder eines der verbleibenden Pakete zur parallelen Implementation einer inversen diskreten Kosinustransformation (IDCT) und zur Bewegungskompensation auf Makroblockebene entgegennimmt.

2. Parallelimplementation eines Videodecoders auf Makroblockebene in einer Parallelverarbeitungsumgebung nach Anspruch 1, **dadurch gekennzeichnet, dass** der Hauptknoten (11) die Pakete decodierter Daten an die Mehrzahl von Dienstknoten (12-14) für verteilte Speichersysteme kommuniziert.

3. Parallelimplementation eines Videodecoders auf Makroblockebene in einer Parellelverarbeitungsumgebung nach Anspruch 1, **dadurch gekennzeichnet, dass** sie einen zusammengeschalteten gemeinsam genutzten Speicher (59) umfasst, welcher durch den Hauptknoten (55) zu verarbeitende Daten und durch die Mehrzahl von Dienstknoten (56-58) zu verarbeitende Daten für gemeinsam genutzte Speichersysteme absondert.

4. Parallelimplementation eines Videodecoders auf Makroblockebene in einer Parallelverarbeitungsumgebung nach Anspruch 1, **dadurch gekennzeichnet, dass** die Dienst-Knoten/Prozessoren (12-14) das Paket verarbeiten und die in einen einzelnen Speicherpuffer zu schreibende Ausgabe berechnen.

5. Parallelimplementation eines Videodecoders auf Makroblockebene in einer Parallelverarbeitungsumgebung nach Anspruch 1, **dadurch gekennzeichnet, dass** der Hauptknoten (11) und die Dienst-Knoten/Prozessoren (12-14) Berechnungsstränge (33-36) und Kommunikationsstränge (29-32) für verteilte Speicherarchitekturen haben.

6. Parallelimplementation eines Videodecoders auf Makroblockebene in einem verteilten Speichersystem nach Anspruch 5, **dadurch gekennzeichnet, dass** die Kommunikationsstränge (29-32) bei der Kommunikation des Hauptknotens (11) und der Dienst-Knoten/Prozessoren (12-14) untereinander behilflich sind.

7. Verfahren zur Videodecodierung auf Markroblockebene in einem Parallelverarbeitungssytem, **dadurch gekennzeichnet, dass** es folgende Schritte umfasst:

   Decodieren von codierten diskreten Kosinustransformations-Koeffizienten (DCT) auf Makroblockebene in einem längenvariablen Decodierblock (49);

   Absondern der decodierten diskreten Kosinustransformations-Koeffizienten in vorbestimmte Pakete, welche gleiche Teile von Makroblöcken beinhalten; und

   Durchführen parallelisierter Inverser diskreter Kosinustransformationen und Bewegungskompensationen unter Verwendung einer Mehrzahl von Dienst-Knoten/Prozessoren (51-53) sowie eines Hauptknotens (11; 50; 55), von denen jeder eines der Pakete verarbeitet.

8. Verfahren zur Videodecodierung auf Makroblockebene in einem verteilten Speichersystem nach Anspruch 7, **dadurch gekennzeichnet, dass** diskrete Kosinustransformations-Koeffizienten ungleich Null zur Verminderung der Datenabhängigkeit der Dienstknoten/Prozessoren (51-53) in einen Puffer gepackt werden.

**Revendications**

1. Mise en oeuvre parallèle du niveau macrobloc d'un décodeur vidéo dans un environnement de processeurs parallèles comprenant :

   un bloc de décodage de longueur variable (10, 40, 49, 60) et **caractérisée en ce que** le bloc de décodage de longueur variable (10, 40, 49, 60) décode un coefficient encodé de transformée en cosinus discrète (DCT) au niveau macrobloc et des partitions du coefficient de transformée en cosinus discrète (DCT) en paquets prédéterminés qui comprennent des portions égales de macroblocs,

   un noeud maître (11, 45, 50, 55) qui reçoit un paquet de coefficients décodés de transformée en cosinus discrète (DCT), et

   une pluralité de noeuds esclaves/de processeurs (12-14, 41-44, 51-53, 56-58), chacun recevant un des paquets restants pour la mise en oeuvre parallèle de la transformée inverse en cosinus discrète (IDCT) et de la compensation de mouvement au niveau macrobloc.

2. Mise en oeuvre parallèle du niveau macrobloc d'un décodeur vidéo dans un environnement de processeurs parallèles selon la revendication 1, **caractérisée en ce que** le noeud maître (11) communique les paquets de données décodées à la pluralité de noeuds esclaves (12-14) pour des systèmes de mémoires distribuées.

3. Mise en oeuvre parallèle du niveau macrobloc d'un décodeur vidéo dans un environnement de processeurs parallèles selon la revendication 1, **caractérisée en ce qu'**elle comprend une mémoire partagée interconnectée (59) qui sépare des données à traiter par le noeud maître (55) et par la pluralité de noeuds esclaves (56-58) pour des systèmes de mémoires partagées.

4. Mise en oeuvre parallèle du niveau macrobloc d'un décodeur vidéo dans un environnement de processeurs parallèles selon la revendication 1, **caractérisée en ce que** les noeuds esclaves/les processeurs (12-14) traitent les paquets et calculent la sortie à écrire sur un seul tampon de mémoire.

5. Mise en oeuvre parallèle du niveau macrobloc d'un décodeur vidéo dans un environnement de processeurs parallèles selon la revendication 1, **caractérisée en ce que** le noeud maître (11) et les noeuds esclaves/les processeurs (12-14) comprennent des threads de calcul (33-36) et des threads de communication pour des architectures de mémoires distribuées.

6. Mise en oeuvre parallèle du niveau macrobloc d'un décodeur vidéo dans un système de mémoire distribuée selon la revendication 5, **caractérisée en ce que** les threads de communication (29-32) aident à la communication du noeud maître (11) et des noeuds esclaves/des processeurs (12-14) entre eux.

7. Procédé de décodage vidéo au niveau macrobloc dans un environnement de processeurs parallèles **caractérisé en qu'**il comprend des étapes consistant à :

   décoder au niveau macrobloc des coefficients encodés de transformée en cosinus discrète (DCT) dans un bloc de décodage de longueur variable (49), séparer les coefficients décodés de transformée en cosinus discrète en paquets prédéterminés qui comprennent des portions égales de macroblocs, et
   effectuer la transformée inverse en cosinus discrète et la compensation de mouvement parallélisées à l'aide de la pluralité de noeuds esclaves/de processeurs (51-53) et d'un noeud maître (11, 50, 55), chacun d'entre eux traitant un des paquets.

8. Procédé de décodage vidéo au niveau macrobloc dans un système de mémoire distribuée selon la revendication 7, **caractérisé en ce que** les coefficients de transformée en cosinus discrète différents de zéro sont mis en paquets dans un tampon réduisant la dépendance des données sur les noeuds esclaves/les processeurs (51-53).

Fig. 1

**Fig. 2**

**Fig. 3**

**Fig. 4**

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0710026 A

- US 6678331 B

### Non-patent literature cited in the description

- Software MPEG-2 Video Decoder on a 200-MHz, Low Power Multimedia Microprocessor. *IEEE,* 1998, 3141-3144

- **Mikael Karlsson Rudberg ; Lars Wanhammar.** An MPEG-2 Video Decoder DSP Architecture. *Proc. 1996 IEEE Digital Signal Processing Workshop,* 199-202